(19) **Europäisches Patentamt**
**European Patent Office**
**Office européen des brevets**

(11) **EP 3 504 529 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(21) Anmeldenummer: **17757775.6**

(22) Anmeldetag: **28.08.2017**

(51) Int Cl.:
*G01L 25/00* (2006.01)        *G01L 1/08* (2006.01)
*G01G 23/01* (2006.01)        *G01L 3/12* (2006.01)

(86) Internationale Anmeldenummer:
**PCT/EP2017/071536**

(87) Internationale Veröffentlichungsnummer:
**WO 2018/041773 (08.03.2018 Gazette 2018/10)**

(54) **VORRICHTUNG UND VERFAHREN ZUR KALIBRIERUNG VON KRAFT- UND DREHMOMENTMESSEINRICHTUNGEN**

APPARATUS AND METHOD FOR CALIBRATING FORCE AND TORQUE MEASURING DEVICES

DISPOSITIF ET PROCÉDÉ D'ÉTALONNAGE DE DISPOSITIFS DE MESURE DE FORCE ET DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2016 DE 102016010668**

(43) Veröffentlichungstag der Anmeldung:
**03.07.2019 Patentblatt 2019/27**

(73) Patentinhaber: **Technische Universität Ilmenau**
**98693 Ilmenau (DE)**

(72) Erfinder:
• **FRÖHLICH, Thomas**
**98693 Ilmenau (DE)**
• **RAHNEBERG, Ilko**
**98694 Ilmenau OT Gehren (DE)**
• **HILBRUNNER, Falko**
**98693 Ilmenau (DE)**
• **SCHLEICHERT, Jan**
**73540 Heubach (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
**US-A1- 2012 266 648**

• **WENLIN JIN ET AL: "On the Calibration of Multicomponent Microforce Sensors", JOURNAL OF MICROELECTROMECHANICAL SYSTEMS, IEEE SERVICE CENTER, US, Bd. 7, Nr. 2, 1. Juni 1998 (1998-06-01), XP011034794, ISSN: 1057-7157**
• **YUSAKU FUJII ET AL: "A method for calibrating force transducers against oscillation force; A method for calibrating force transducers against oscillation force", MEASUREMENT SCIENCE AND TECHNOLOGY, IOP, BRISTOL, GB, Bd. 14, Nr. 8, 1. August 2003 (2003-08-01) , Seiten 1259-1264, XP020063859, ISSN: 0957-0233, DOI: 10.1088/0957-0233/14/8/310**

**Beschreibung**

Die vorliegende Erfindung betrifft die Kalibrierung von Kraft- und Drehmomentmesseinrichtungen, insbesondere von mehrachsialen Messeinrichtungen, die auch zur Vorgabe und Messung von Kraft-Weg- und Drehmoment-Winkel-Kennlinien einsetzbar sind. Dabei kann die Kalibrierung in Einbaulage und ohne Verwendung externer Kräfte und Momente simultan oder sukzessiv in allen Messachsen realisiert werden.

Die Kalibrierung von Kraft- und Drehmomentmesseinrichtungen wird typischerweise auf die Kalibrierrichtlinien für einachsige Kraft- bzw. Drehmomentsensoren zurückgeführt. Dabei werden für einfache Kalibrierungen Referenzmesssysteme zur Bereitstellung bekannter externer Kräfte und Momente eingesetzt. Für hochgenaue Kalibrierungen bzw. zur Realisierung der Einheit der Kraft wird die im Erdschwerefeld wirkende Gewichtskraft von rückführbar an die Einheit Masse angeschlossenen Gewichten als externe Kalibrierkraft verwendet. Drehmomente werden entsprechend der Definition durch kalibrierte Kräfte und entsprechende Hebel kalibriert.

Jedoch ergeben sich anwendungsspezifisch unterschiedliche Anforderungen an die Kraft- und Drehmomentsensoren, woraus verschiedene Normen und Empfehlungen für Kalibrierungen resultieren. Allgemein gilt für Kraftaufnehmer die internationale Norm EN ISO 376 [1], welche Spezifikationen und Beurteilungsklassen von Kraftaufnehmern enthält. Außerdem werden in der VDI-Richtlinie 2638 [2] Kenngrößen von Kraftaufnehmern erläutert. Nationale Vorschriften wie die DAkkS-R3.3 [3] sind von der EN ISO 376 und der VDI-2638 abgeleitet.

Für Wägezellen werden die Empfehlungen OIML R 60 [4] und OIML R 76 [5] angewendet.

Für eine einachsiale Kraftkalibrierung höchster Genauigkeit im Lastbereich von 1 N bis 2 MN werden Kalibrierkräfte anhand der Gewichtskraft einer genau bekannten Masse erzeugt [13]. Für Kräfte ab 2 MN wird die Gewichtskraft zusätzlich mit Hebeln übersetzt [14] oder hydraulisch verstärkt [15].

Für die Kalibrierung kleiner Kräfte unter 10 N wird häufig auf das Prinzip der elektromagnetischen Kraftkompensation zurückgegriffen. So wird z. B.in [16] ein Totlastsystem für bis zu 10 N mit einem kleinsten Lastschritt von 1 μN vorgestellt, welches auf einer Balkenwaage und einem Sartorius CCE36 Massekomparator [17] basiert.

Für Kalibrierkräfte unter 2 N werden in [18, 19] Systeme vorgestellt, bei denen Präzisionswaagen zum Einsatz kommen. Der zu kalibrierende Sensor wird mit Hilfe eines Aktors gegen die Waage gedrückt und die Signale beider Systeme werden miteinander verglichen.

Für kleinste Kräfte im Nanonewton-Bereich werden Verfahren wie die elektrostatische Kraftkompensation eingesetzt [20]. Ein weiteres Kalibriersystem und eine Kalibriermethode für Kraftmesssysteme ist in der Schrift US2012/0266648 offenbart.

Das Drehmoment ist als das Kreuzprodukt aus dem Vektor des Abstandes der Drehachse zum Kraftangriffspunkt und dem Kraftvektor definiert. Somit kann eine Drehmomentkalibriereinrichtung mit einem Hebel und Gewichten im Schwerefeld der Erde aufgebaut werden. Diese Vorrichtungen werden als Direktbelastungseinrichtungen bezeichnet und in einem Nenndrehmomentbereich von 10 mNm bis 20 kNm eingesetzt. Für größere Drehmomente bis 1,1 MNm wird das am Hebel angreifende Kräftepaar über Aktoren erzeugt und mit Hilfe von Referenzsensoren gemessen.

Für Drehmomentsensoren gilt die DIN 51309 [6] sowie die VDI/VDE-Richtlinie 2646 [7], weiterhin bestehen Ergänzungen in Form von DAkkS-Richtlinien für statische Wechseldrehmomente [8] sowie zur Kalibrierung von Drehmomentwerkzeugen [9].

Mehrkomponentensensoren stellen spezielle Anordnungen zur simultanen Erfassung von Kräften und Drehmomenten dar. In DE 10 2011 106 894.9 wird beispielsweise eine Vorrichtung zur simultanen Erfassung von Kraft- und Momentenkomponenten mit einem Verformungskörper und Sensoren zur Weg- oder Dehnungsmessung beschrieben.

Die Firma Gassmann Testing and Metrology betreibt ein DAkkS-Akkreditiertes Kalibrierlabor für Mehrkomponentensensoren, welches nach unternehmensinternen Standards [11] arbeitet.

Weiterhin befindet sich ein offizieller Standard für die Kalibrierung von Sechskomponenten Messplattformen bei der American Society for Testing and Materials (ASTM) in der Entwicklung [12].

Alle bekannten Verfahren benötigen genau bekannte externe Kräfte oder Drehmomente, die auf das zu kalibrierende System einwirken. Weiterhin erfordern Kalibrierungen von Kraftmesssystemen mit Gewichten nach dem Stand der Technik stets eine Ausrichtung der zu kalibrierenden Messachse vertikal, also in Richtung der Fallbeschleunigung, oder Umlenkungen der Kalibrierkräfte, die wiederrum weitere nachteilige Messunsicherheitsbeiträge verursachen. Kommen kalibrierte Referenzmesssysteme zum Einsatz, so können nachteilige Messabweichungen durch die Lageänderung zwischen Kalibrierung der Referenz und deren Verwendung zur Kalibrierung des Prüflings entstehen. Für die Kalibrierung von Momenten sind Hebel erforderlich, wobei die Unsicherheit der Hebellänge das Kalibrierergebnis maßgeblich nachteilig beeinflusst.

Ungeachtet der Vielfalt an Vorschriften und Normen für einachsiale Kraftsensoren, Waagen und Drehmomentsensoren existieren derzeit keine offiziellen Kalibriervorschriften für Mehrkomponentensensoren [10].

Aufgrund der genannten Unzulänglichkeiten werden für mehrachsiale Kraft- und Momentenmesssysteme, selbst bei aufwendigen Kalibrierungen derzeit nur relativ hohe Unsicherheiten erreicht. Aufgabe der vorliegenden Erfindung ist es deshalb, die Nachteile aus dem Stand der Technik zu überwinden und eine Vorrichtung und ein Verfahren zur rückführbaren Kalibrierung von Kraft- und Drehmomentmesseinrichtungen, insbesondere von Messeinrichtungen zur simultanen Erfassung von mehreren Kraft- und Drehmomentkomponenten zu ermöglichen. Dies betrifft sowohl die statische als auch die dynamische Kalibrierung.

Erfindungsgemäß wird die Aufgabe durch eine Vorrichtung zur Kalibrierung von Kraft- und Drehmomentmesseinrichtungen gelöst, die folgendes umfasst:

- einen ortsfesten Rahmen,
- einen mechanisch steifen Träger (1), der beweglich bezüglich des ortsfesten Rahmens ist und auf den Kräfte und Momente wirken,
- Positionsmesssysteme (2) zum Messen aller Freiheitsgrade der räumlichen Position und Drehlage des Trägers (1) bezüglich des Rahmens
und
- elektrische Aktoren (3), die dafür ausgebildet und angeordnet sind, dass eine Kraft- und Momentübertragung auf den Träger (1) in allen Freiheitsgraden der räumlichen Position und Drehlage des Trägers (1) realisierbar ist.

Dabei sind

- mindestens eine Geschwindigkeitsmesseinheit (4) zur Erfassung der Bewegungsgeschwindigkeit v des Trägers (1) relativ zum Rahmen in allen Freiheitsgraden der räumlichen Position und Drehlage des Trägers (1),
- mindestens eine Reaktionsmesseinheit (5) zur Erfassung einer mittels der Kraft- und Momentübertragung induzierten Reaktionsgröße $U_{induziert}$
sowie
- eine Auswerte- und Regeleinheit (6) zur Auswertung der mit den Reaktions- und Geschwindigkeitsmesseinheiten erfassten Reaktionsgrößen $U_{induziert}$ und Bewegungsgeschwindigkeiten v des Trägers (1) und gleichzeitigen Einstellung der Bewegungsgeschwindigkeit v des Trägers (1) relativ zum Rahmen und Berechnung von Aktorkennlinien sowie deren Orts- und Winkelabhängigkeit
vorgesehen.

Vorteilhaft kann die Regel- und Auswerteeinheit (6) eine Einheit (6a) zur Signalumschaltung zwischen einem ersten Modus zur Erfassung der Reaktionsgröße $U_{induziert}$ und einem zweiten Modus zur Vorgabe der Betätigungsgrößen der elektrischen Aktoren (3) umfassen.

Der Träger (1) ist nach einer Ausführungsform als Raumkreuz ausgebildet. An jedem Raumkreuzarm sind dazu jeweils zwei erste elektrische Aktoren (3), zwei Positionsmesssysteme (2) und zwei zweite elektrische Aktoren (3a) angeordnet. Die zweiten elektrischen Aktoren (3a) sind jeweils in räumlicher Nähe und mit gleicher Wirkrichtung zu den ersten elektrischen Aktoren (3) positioniert.

Die elektrischen Aktoren (3, 3a) können mindestens jeweils eine Spule und einen Permanentmagneten umfassen.

Nach einer weiteren Ausführungsform der Vorrichtung zur Kalibrierung von Kraft- und Drehmomentmesseinrichtungen ist die Betätigungsgröße der elektrischen Aktoren ein Betätigungsstrom $I_{spule}$ und die Reaktionsgröße ist die durch die Relativbewegung des Trägers (1) zum Rahmen in den Aktorspulen induzierte Spannung $U_{induziert}$. Vorteilhaft sind die Geschwindigkeitsmesseinheiten (4) Laserinterferometer.

Zur Erfindung gehört auch ein Verfahren zur Kalibrierung von Kraft- und Drehmomentmesseinrichtungen mit einer erfindungsgemäßen Vorrichtung, wobei

- mit Hilfe der Auswerte- und Regeleinheit (6) die Betätigungsgrößen der elektrischen Aktoren (3) derart eingestellt werden, dass die durch die Relativbewegung des Trägers (1) zum Rahmen induzierten Reaktionsgrößen $U_{induziert}$ messbar sind,
- die Bewegungsgeschwindigkeit v des Trägers (1) relativ zum Rahmen und die Reaktionsgröße $U_{induziert}$ erfasst werden
und
- aus der erfassten Bewegungsgeschwindigkeit v und der Reaktionsgröße $U_{induziert}$ die Aktorkennlinien zur Kalibrierung der Kraft- und Drehmomentmesseinrichtungen in mehreren Freiheitsgraden errechnet werden.

Eine vorteilhafte Ausgestaltung des Verfahrens besteht darin, dass durch Bestromung der Spulen der zweiten elektrischen Aktoren (3a) eine Relativbewegung des Trägers (1) zum Rahmen generiert wird und die in den Spulen der ersten elektrischen Aktoren (3) induzierten Spannungen $U_{induziert}$ erfasst und die Aktorkennlinien der ersten elektrischen Aktoren (3) errechnet werden.

Durch Bestromung der Spulen der ersten elektrischen Aktoren (3) kann eine Relativbewegung des Trägers (1) zum Rahmen generiert, die in den Spulen der zweiten elektrischen Aktoren (3) induzierten Spannungen $U_{induziert}$ erfasst und die Aktorkennlinien der zweiten elektrischen Aktoren (3) errechnet werden.

Zur Steigerung der Messgenauigkeit werden nach einer Ausgestaltung des Verfahrens die Spulen der ersten und zweiten elektrischen Aktoren (3, 3a) über die Einheit zur Signalumschaltung (6a) gleichzeitig bestromt und die Betätigungsströme der Spulen der ersten und zweiten elektrischen Aktoren erfasst und miteinander rechnerisch verknüpft.

Die Einheit zur Signalumschaltung (6a) kann dazu die Spulen entgegengesetzt in Reihen schalten.

Nach einer weiteren Ausführungsform des Verfahrens werden die Bewegungsgeschwindigkeiten des Trägers (1) relativ zum Rahmen für jede Koordinatenrichtung separat eingestellt und ausgewertet.

Die Relativbewegung des Trägers (1) zum Rahmen wird vorteilhaft mit einem zeitlich periodisch verlaufenden Betätigungsstrom $I_{spule}$ generiert. Die Aktorkennlinien können aus gemittelten Messwerten einer Signalperiode errechnet werden.

Eine vorteilhafte Ausgestaltung des erfindungsgemäßen Verfahrens besteht auch darin, dass der erste Modus zur Erfassung der Reaktionsgrößen und der zweite Modus zur Vorgabe der Betätigungsgrößen abwechselnd oder gleichzeitig ablaufen.

Die vorliegende Erfindung bezieht sich direkt auf die Kalibrierung einer Vorrichtung zur simultanen Erfassung von drei gleichrangigen Kraft- und drei gleichrangigen Momentenkomponenten, sowie zur Vorgabe von Kraft-Weg-Kennlinien und zum Einprägen von Kräften und Momenten.

Vorrichtungen und Verfahren zur Kraft- und Drehmomentmessung sind aus dem Stand der Technik bekannt. Hierfür gibt es verformungsbasierte Verfahren, durch Messung der mechanischen Dehnung oder mechanischen Spannung, sowie solche mit aktiver Aktuierung eines schwebenden Elementes. Insbesondere mehrachsiale Messeinrichtungen mit aktiver Aktuierung eines schwebenden Elementes sind auch zur Vorgabe und/oder Messung von Kraft-Weg- und Drehmoment-Winkel-Kennlinien einsetzbar. In DE 10 2015 104 696 B3 wird eine elektrodynamische Levitationseinrichtung, Verwendung derselben und Verfahren zu ihrem Betrieb beschrieben. Bei genannter Vorrichtung basiert die Kraft- und Momentenmessung auf der Kompensation wirkender äußerer Kräfte und Momente derart, dass die mit sechs Positionsmesssystemen erfasste rotatorische und translatorische Lage eines Flotors relativ zu einem festen Gestell in einem geschlossenen Regelkreis konstant gehalten wird. Die Eingangsgrößen der elektrodynamischen Aktoren sind dabei ein Maß für die auf das System einwirkenden äußeren Kräfte und Drehmomente. Die Drehmomente werden dabei auf Basis entgegengesetzt wirkender Kräftepaare ermittelt.

Mit der vorliegenden Erfindung wird insbesondere auf Vorrichtungen und Verfahren zur Kraft- und Drehmomentmessung mit aktiver Positionierung eines schwebenden Elementes durch Tauchspulaktoren Bezug genommen. Die Kompensationskräfte / -drehmomente ergeben sich hierbei aus der Bestromung von am Flotor befindlichen, in am Stator jeweilig zugeordneten Magnetsystemen (z. B. Topfmagnete mit Permanentmagneten) eingetauchten Spulen und den daraus resultierenden Kraftwirkungen (Lorentzkraft) auf die Spulen.

Daneben ist auch ein mechanisches Führungssystem mit einem verformungsbasierten Verfahren, durch Messung der mechanischen Dehnung oder mechanischen Spannung, möglich, welches im Sinne der hiesigen Offenbarung mit zusätzlichen Aktoren und Sensoren ausgestattet werden kann. In DE 10 2011 106 894 A1 ist eine derartige Vorrichtung offenbart.

Maßgeblich für die Aktorkennlinien, also die Beziehung zwischen der Stellgröße Strom $I_{spule}$ und der wirkenden Kompensationskraft F, sind die Länge L der im Magnetfeld befindlichen Leiterschleife und die magnetische Flussdichte B, zusammengefasst als Aktorparameter BL.

$$F = BL * I_{spule} \qquad\qquad (1)$$

Wird die Spule im Magnetfeld zwangsweise mit einer Geschwindigkeit v bewegt, so wird eine Spannung $U_{induziert}$ induziert. Dabei ist die über den freien Enden der Spule messbare Spannung $U_{induziert}$ ebenfalls vom Aktorparameter BL abhängig.

$$U_{induziert} = BL * v \qquad\qquad (2)$$

Folglich kann der Aktorparameter BL aus der Messung der über einer mit der Geschwindigkeit v bewegten Spule induzierten Spannung ermittelt werden, wenn die Bewegungsgeschwindigkeit ebenfalls gemessen wird.

$$BL = U_{induziert} / v \qquad\qquad (3)$$

Die einwirkende Kraft kann somit auf Basis der Messung der induzierten Spannung $U_{induziert}$, des Spulenstromes $I_{spule}$ und der Bewegungsgeschwindigkeit v der Spule ermittelt werden:

$$F = U_{induziert} * I_{spule} / v \qquad\qquad (4)$$

Dieses Verfahren ist aus Watt-Waagen-Experimenten [21] zur Neudefinition der Einheit der Masse durch Festlegung der Planck-Konstanten bekannt, wobei jedoch die Masse aus der Gewichtskraft und einem exakt bekannten Wert der lokalen Fallbeschleunigung g folgt. Kräfte hingegen können ohne vorherige Messung der lokalen Fallbeschleunigung g aus den Messgrößen Spannung, Strom und Geschwindigkeit abgeleitet werden. Das gilt auch für Kräfte, die nicht in vertikaler Richtung gemessen oder kalibriert werden.

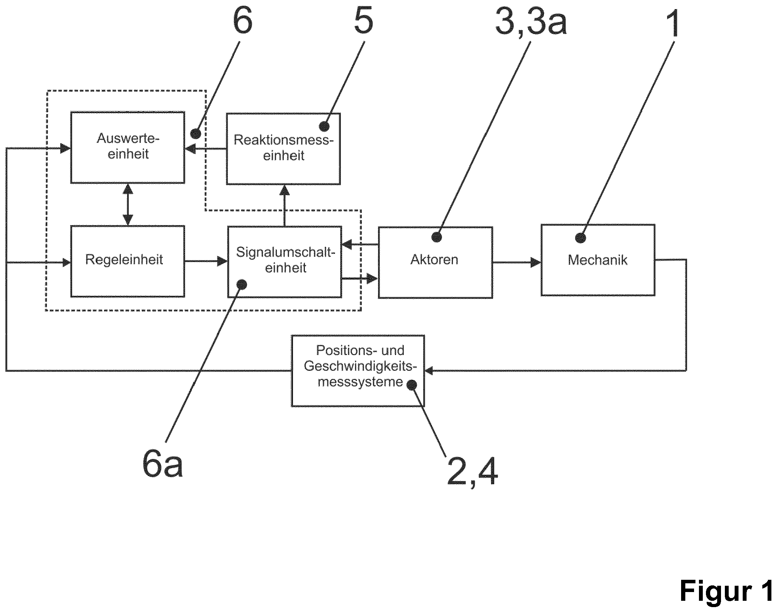

In Figur 1 ist eine Prinzipdarstellung der erfindungsgemäßen Vorrichtung zur Kalibrierung von Kraft- und Drehmomentmesseinrichtungen gezeigt. Die aktuelle Position des Flotors (1) bezüglich der translatorischen und rotatorischen Freiheitsgrade wird mit Hilfe der Positions- und Geschwindigkeitsmesssysteme (2,4) erfasst und von der Auswerte- und Regeleinheit (6) verarbeitet. Die Reaktionsmesseinheit (5) dient zur Erfassung der im Bewegungsmodus induzierten Spannungen, die ebenfalls in der Auswerte- und Regeleinheit (6) verarbeitet werden. Unter Verwendung einer optionalen Signalumschalteinheit (6a) erhalten die Aktoren (3,3a) ihr Stellsignal zur Erzeugung der Aktorkräfte, vorzugsweise als Strom durch die Spule eines elektromagnetischen Aktors. Die durch die Aktoren (3,3a) erzeugten Kräfte und Momente ändern die Position und Bewegungsgeschwindigkeit des mechanischen Flotors (1). Die Kraftmessung durch Kompensation der einwirkenden Kräfte, mit einer Ableitung aus der Messgröße, also dem Vektor aller Kräfte und Drehmomente, aus den gemessenen Spulenströmen und den bekannten oder vorher kalibrierten Aktorparametern BL der elektromagnetischen Aktoren wird im Folgenden als Kompensationsmodus oder Modus zur Vorgabe einer Betätigungsgröße bezeichnet. Wobei dieser Modus auch die Vorgabe von Kraft-Wegkennlinien durch Variation der Führungsgröße, also dem Vektor der aktuellen Sollposition des Flotors bezüglich der translatorischen und rotatorischen Freiheitsgrade, mit einbezieht.

Die Ermittlung der Aktorparameter und der Aktorkennlinien aus der jeweils induzierten Spannung über der im Magnetsystem bewegten Spule wird im Folgenden als Bewegungsmodus oder Modus zur Erfassung einer Reaktionsgröße bezeichnet.

Zur Erzeugung der Spulenbewegung relativ zu den Magnetsystemen ist ein zusätzliches Aktorsystem vorteilhaft. Dies kann komplett separat angeordnet sein [22]. Es sind aber auch Anordnungen bekannt, bei denen eine zweite Spulenwicklung (bifilare Spule) verwendet wird [23]. Bei Verwendung von Aktorspulen mit bifilarer Wicklung befinden sich die ersten und zweiten Spulen jeweils auf einem gemeinsamen Träger [23,25]. Im Bewegungsmodus wird eine Spulenwicklung bestromt um eine Bewegung zu erzeugen, die induzierte Spannung über der zweiten Wicklung wird gemessen. Hier wird die erreichbare Unsicherheit maßgeblich durch die Gegeninduktivitäten der ersten und zweiten Spulen beschränkt.

Prinzipiell ist auch eine Ausführung der hier beschriebenen Vorrichtung mit nur sechs elektrischen Aktoren mit einfacher Wicklung denkbar, wobei im Bewegungsmodus gleichzeitig die Aktorspulen bestromt werden, um eine Bewegung zu erzeugen und die über diesen Spulen durch die resultierende Bewegung induzierten Spannungen gemessen werden. In die gemessene Spannung geht dann jedoch auch die Impedanz der Spulen ein, wodurch höhere Messunsicherheiten entstehen können. Durch die zusätzlichen Unsicherheitsbeiträge sind diese Ausführungsformen weitgehend Anwendungen mit geringeren Genauigkeitsanforderungen vorbehalten.

In der im Folgenden beschriebenen Vorzugsausführung mit jeweils direkt gegenüberliegenden, am Flotor angeordneten ersten und zweiten elektrodynamischen Aktoren entfallen die genannten Effekte. Auch ist die aufwendige Bestimmung von Kopplungsinduktivitäten nicht erforderlich. Außerdem können die ersten und zweiten Aktoren gemeinsam im Kompensationsmodus eingesetzt werden.

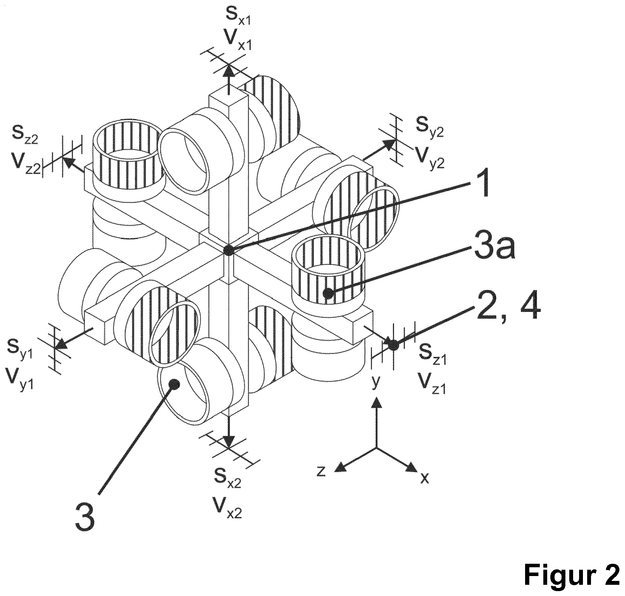

Wie in dem in Figur 2 dargestellten Ausführungsbeispiel der erfindungsgemäßen Vorrichtung gezeigt, umfasst die Vorrichtung sechs Positionsmesssysteme (2) und sechs elektrische Aktoren (3) (erste elektrische Aktoren). Zusätzlich weist die Vorrichtung sechs zweite elektrische Aktoren (3a) (Zusatzaktoren) auf. Jeder der zusätzlichen Aktoren ist einem der bislang für die Positionsregelung und Kraft-Momentenmessung verwendeten ersten Aktoren (3) derart zugeordnet, dass ihre Wirkungsrichtungen übereinstimmen und sie sich in unmittelbarer räumlicher Nähe befinden.

Vorzugsweise sind die ersten und zweiten elektrischen Aktoren jeweils direkt gegenüberliegend an den Armen eines z. B. raumkreuzförmig ausgebildeten Flotors (1) anzuordnen.

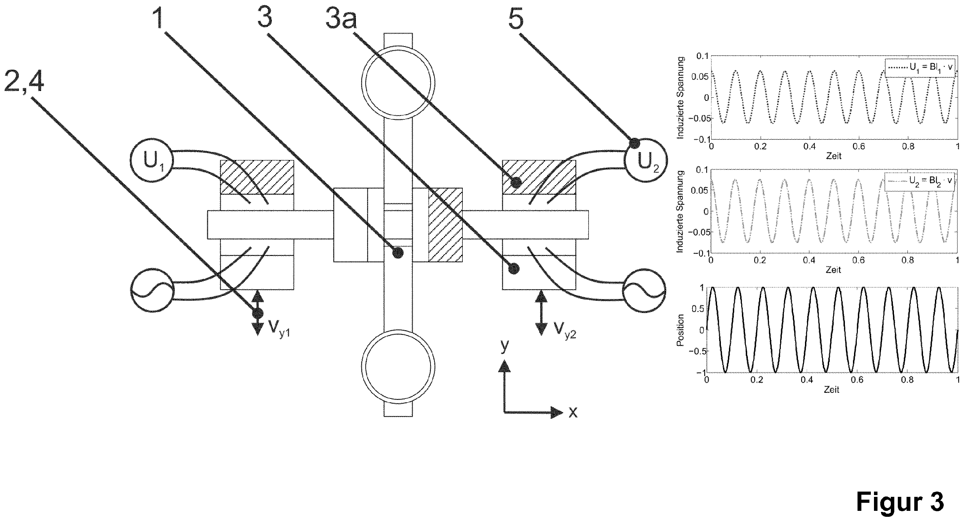

Wie in Figur 3 gezeigt, wird im Bewegungsmodus der Flotor (1) zunächst durch einen geschlossenen Regelkreis mit den Positionssignalen der Positionsmesssysteme (2) als Führungsgröße und den Zusatzaktoren (3a) als Stellglieder in die Nullposition geregelt. Anschließend wird ebenfalls über die Zusatzaktoren (3a) in einer Kraftrichtung (zwei Aktoren je Achse) ein beliebiges Bewegungssignal aufgeprägt, vorzugsweise eine Sinusschwingung. Diese Art der Modulierung im Bewegungsmodus ist bekannt [24]. Die induzierte Spannung $U_{induziert}$ über den zu kalibrierenden ersten Spulen (3) wird erfasst. Die jeweils einer Spule zugeordneten Geschwindigkeiten v folgen unmittelbar aus den zeitsynchron aufgenommenen Positionssignalen. Durch eine entsprechende Datenauswertung können die Aktorparameter der Spulen der ersten elektrischen Aktoren (3) bestimmt werden.

Vorteilhaft kann die Bestimmung der Aktorparameter anschließend für die Zusatzaktoren (3a) erfolgen, indem die Bewegung durch die Bestromung der Spulen der ersten Aktoren (3) ausgeführt und die Spannung über den Spulen der zweiten Aktoren (3a) gemessen wird.

Im Kompensationsmodus, also bei Kraft- und Momentenmessungen mit der erfindungsgemäßen Vorrichtung, können sowohl die Spulen der ersten Aktoren (3) als auch die Spulen der zweiten Aktoren (3a) derart bestromt werden, dass die Aktorkräfte der einander zugeordneten Aktoren sich addieren. Vorzugsweise kann dies durch eine entgegengesetzte Reihenschaltung der Spulen erfolgen, wodurch die Traglast des Systems ebenfalls erhöht wird, jedoch weiterhin nur sechs Achsen zu regeln und entsprechend sechs Stromtreiber erforderlich sind. Dies kann durch eine zusätzliche Einheit zur Signalumschaltung (6a) realisiert werden. Zur Genauigkeitssteigerung kann eine solche Einheit auch vorteilhaft zum Schalten zwischen Spannungsmesskreis im Bewegungsmodus und stromtreibender Schaltung im Kompensationsmodus verwendet werden.

Für eine rückführbare Kraftkalibrierung sind rückführbare Messungen der Geschwindigkeit und der induzierten Spannung im Bewegungsmodus und rückführbare Messungen der Aktorströme im Kompensationsmodus erforderlich.

Durch zusätzliche Verwendung eines rückführbar kalibrierten Winkelmesssystems kann nach der Bestimmung der Aktorparameter für alle Spulen in oben beschriebener Weise, ebenfalls eine Drehmomentkalibrierung erfolgen. Dabei wird als zusätzliche geometrische Größe der Hebelarm r eingeführt, der gemeinsam mit dem Aktorparameter BL kalibriert werden kann. Hierzu wird im Bewegungsmodus die Winkelgeschwindigkeit $\omega$ und die in den der Drehmomentmessung zugeordneten elektrischen Aktoren induzierte Spannung $U_{induziert}$ gemessen

$$BL^*r = U_{induziert} / \omega \qquad\qquad (5)$$

Im Kompensationsmodus wird durch die Differenz i der Ströme der zur Drehmomenterzeugung verwendeten Spulen ein Drehmoment M erzeugt:

$$BLr^*i = M = i^* U_{induziert} / \omega \qquad\qquad (6)$$

Dies ist ebenfalls für Ausführungsformen der Vorrichtung gemäß einem Grundaufbau zur Kraft- und Drehmomentmessung mit aktiver Positionierung eines schwebenden Elementes durch rotatorische elektrodynamische Antriebe möglich, wobei die Messung der Winkelgeschwindigkeit für die Bestimmung eines Drehmoment-Spulenstrom Aktorparameters notwendig ist.

Mit der vorliegenden Erfindung werden ein Verfahren und eine Vorrichtung zur Kalibrierung von mehrachsialen Kraft- und Drehmomentmesseinrichtungen auf Grundlage der Bestimmung des Aktorparameters BL vorgeschlagen. Im Gegensatz zu bekannten Verfahren zur Kalibrierung von Kraft- und Drehmomentmesseinrichtungen erfolgt die Kalibrierung ohne die Notwendigkeit genau bekannter externer Kräfte und Drehmomente durch Spannungs- und Geschwindigkeitsmessungen sowie der Messung des Aktorstromes. Im Gegensatz zu Verfahren zur Definition der Einheit der Masse wird mit der vorliegenden Erfindung die Einheit der Kraft, das Newton und die Einheit des Drehmoments direkt rückführbar kalibriert Die Kalibrierung kann im Gegensatz zu bekannten Lösungen raumrichtungsunabhängig, also in beliebigen Raumrichtungen erfolgen. Daher ist das vorgeschlagene Verfahren sowohl für einachsiale Kraft- und / oder Drehmomentmesseinrichtungen als auch für mehrachsiale Kraft- und / oder Drehmomentmesseinrichtungen einsetzbar.

Die vorgestellte bevorzugte Ausführungsform bezieht sich auf einen Grundaufbau zur Kraft- und Drehmomentmessung mit aktiver Positionierung eines schwebenden Elementes durch Tauchspulaktoren und verbindet die Vorteile des Aufbaus ohne Bewegungsmechanik mit der Selbstkalibrierung. Die durch die zur Kalibrierung erforderlichen Zusatzaktoren erhöhte Eigenmasse des Flotors kann vorzugsweise im Kompensationsmodus durch Kalibrierung und Nutzung der Zusatzaktoren ausgeglichen werden, wobei sich die maximale Kraft in den horizontal zur Fallbeschleunigung wirkenden Messachsen verdoppelt.

Ein weiterer Vorzug der vorliegenden Erfindung ist die Kalibrierung mit geringen Hüben im Bewegungsmodus, wodurch in Kombination mit der 6-Achs-Positionsregelung alle translatorischen und rotatorischen Komponenten der Bewegung simultan geregelt oder erfasst werden können. Hierdurch werden Abweichungen durch parasitäre Bewegungskomponenten (außerhalb der Bewegungsachse des jeweilig zu kalibrierenden elektrischen Aktors) bei der Bestimmung der Aktorparameter BL wesentlich reduziert.

Durch die spezifische Lösung der gestellten Aufgabe ergeben sich einige zusätzliche Vorteile für den Einsatz derartiger selbstkalibrierender Vorrichtungen zur simultanen Erfassung von drei gleichrangigen Kraft- und drei gleichrangigen Momentenkomponenten, sowie zur Vorgabe und Messung von Kraft-Weg-Kennlinien und zum Einprägen von Kräften und Momenten. Dabei kann die Selbstkalibrierung Bestandteil eines Messzyklus sein, wodurch z. B. Messungen in ABBA-Zyklen (Kalibrierung - Messung - Messung - Kalibrierung) möglich werden. Derartige Messablaufschemen stellen in der mehrachsialen Kraft- und Drehmomentenmesstechnik ein Novum dar sind jedoch beispielsweise in der Massemetrologie Stand der Technik [26] und führen zur Reduzierung von Driften und damit zu einer signifikanten Verringerung der Messunsicherheit.

Durch die Unabhängigkeit von Gewichten, Hebelsystemen oder sonstigen Anbauten oder Referenzmesssystemen sowie durch die Unabhängigkeit von der Richtung der Schwerkraft ist das vorliegende Verfahren zur IN-SITU-Kalibrierung der entsprechenden (mehrachsialen) Kraft- und Drehmomentmesseinrichtungen geeignet

## Bezugszeichenliste

| | |
|---|---|
| 1 | mechanisch steifer Träger |
| 2 | berührungslos arbeitende Positionsmesssysteme |
| 3, 3a | berührungslos arbeitende elektrische Aktoren |
| 4 | Geschwindigkeitsmesseinheit |
| 5 | Reaktionsmesseinheit |
| 6 | Auswerte- und Regeleinheit |
| 6a | Einheit zur Signalumschaltung |

| | |
|---|---|
| $I_{spule}$ | Betätigungsstrom der Aktorspulen |
| $U_{induziert}$ | induzierte elektrische Spannung |
| v | Bewegungsgeschwindigkeit des Trägers relativ zum Rahmen |
| $\omega$ | Winkelgeschwindigkeit des Trägers relativ zum Rahmen |

## Literaturliste

[1] International Organization for Standardization: DIN EN ISO 376:2011-09 Metallische Werkstoffe - Kalibrierung der Kraftmessgeräte für die Prüfung von Prüfmaschinen mit einachsiger Beanspruchung, 2011, Beuth

[2] VDI/VDE/DKD: 2638 Kenngrößen für Kraftaufnehmer - Begriffe, Beuth, 2008-10

[3] Deutsche Akkreditierungsstelle GmbH: DAkkS-DKD-R 3-3 Kalibrierung von Kraftmessgeräten, Braunschweig, 2010

[4] International organisation of legal metrology: International Recommendation OIML R60, Metrological regulation for load cells, Edition 2000 (E), 2000,

[5] International organisation of legal metrology: International Recommendation OIML R76-I, Non-automatic weighing instruments, 2006

[6] Deutsches Institut für Normung: DIN 51309:2005-12, Werkstoffprüfmaschinen - Kalibrierung von Drehmomentmessgeräten für statische Drehmomente, Beuth, 2005-12

[7] VDI/VDE 2646, Drehmomentmessgeräte Mindestanforderungen an Kalibrierungen, Beuth, 2006

[8] DAkkS-DKD-R 3-5 Kalibrierung von Drehmomentmessgeräten für statische Wechseldrehmomente, 2010, Deutsche Akkreditierungsstelle GmbH

[9] DAkkS-DKD-R 3-8 Statische Kalibrierung von Kalibriereinrichtungen für Drehmomentschraubwerkzeuge, 2010, Deutsche Akkreditierungsstelle GmbH

[10] D. Schwind, H. Raabe: A new Calibration Procedure for Multicomponent Transducers, XX IMEKO World Congress, Metrology for Green Growth September 9-14, 2012

[11] GTM Testing and Metrology GmbH: Calibration of multicomponent systems of any type, e.g. measuring platforms, with a representation of the uncertainty vector, GTM-RL-002:2011-04, 2011

[12] ASTM International: New Test Method for Verification of Multi-Axis Force Measuring Platforms (Draft Under Development), West Conshohocken, PA, ASTM International, WK43919

[13] Peters, M., et al.: PTB's new 2 MN Deadweight Force Standard Machine. Proceedings of the 19th IMEKO TC3 Conference. 2005.

[14] Jain, S. K.; Kumar, Harish; Titus, S.S.K.; Tegtmeier, Falk; Prenzlow, Norbert; Schwind, Daniel: Metrological characterization of the new IMN force standard machine of NPL India, Measurement, 590-596, 3, 45, 2012

[15] Tegtmeier, Falk; Kumme, Rolf, Seidel, Mark: Improvement of the realization of forces between 2 MN and 5 MN at PTB - the new 5 MN force standard machine, Proceedings of the XIX IMEKO World Congress, 2009; 186- 191

[16] Buchner, Christian: Determination of micro-forces from 1 $\mu$N up to 10 N realized with a full automatically dead load machine developed by the BEV, 2009

[17] Sartorius Weighing Technology GmbH: Sartorius CCE Series: Electronic Mass Comparators, https://www.sartorius.com/fileadmin/fm-dam/DDM/Lab-Products-and-Services/Lab-Weighing/Mass-Comparators/Manuals/MAN-CCE-e.pdf, 2013

[18] Illemann, Jens; Kumme, R: The achievable uncertainty for balance-based force standard machines in the range from micronewton to newton, IMEKO 20th TC3, 3rd TC16 and Ist TC22 Merida, Mexico, 2007

[19] Schlegel, Christian; Slanina, Oliver; Haucke, Günther; Kumme, Rolf: Construction of a standard force machine for the range of 100\muN-200mN, Measurement, 2388-2392, 10, 45,2012, Elsevier

[20] Nesterov, Vladimir: A nanonewton force facility and a novel method for measurements of the air and vacuum permittivity at zero frequencies, Measurement Science and Technology, 084012, 8, 20, 2009, Meas. Sei. Techno!.

[21] Stock, Michael: Watt balance experiments for the determination of the Planck constant and the redefinition of the kilogram Metrologia 50 (2013) R1-R16

[22] Steiner, Richard; Newell, David; Williams, Edwin: Details of the 1998 Watt Balance Experiment Determining the Planck Constant. Volume J. Res. Natl. Inst. Stand. Technol.110, 1-26 (2005)

[23] Robinson, LA.: A simultaneaus moving and weighing technique for a watt balance at room temperature. Metrologia 49 (2012) 108-112

[24] Sutton, C.M.: An oscillatory dynamic mode for a watt balance. Metrologia 46 (2009) 467 - 472

[25] Fang, H.; Kiss, A.; de Mirandes, E.; Lan, J.; Robertsson, L.; Solve, S.; Picard, A. and Stock, M.: Status of the BIPM Watt Balance. IEEE Transactions on Instrumentation ans Measurement, Vol. 62, No. 6 (2013)

[26] Davidson, S.; Perkin, M.; Buckley, M.: Measurement Good Practice Guide No. 71: The measurement of Mass and Weight, (2004) National Physical Laboratory,Teddington, Middlesex, United Kingdom

**Patentansprüche**

1. Vorrichtung zur Kalibrierung von Kraft- und Drehmomentmesseinrichtungen umfassend:

   • einen ortsfesten Rahmen
   • einen mechanisch steifen Träger (1), der beweglich bezüglich des ortsfesten Rahmens ist und auf den Kräfte und Momente wirken
   • Positionsmesssysteme (2) zum Messen aller Freiheitsgrade der räumlichen Position und Drehlage des Trägers (1) bezüglich des Rahmens

und

• elektrische Aktoren (3), die dafür ausgebildet und angeordnet sind, dass eine Kraft- und Momentübertragung auf den Träger (1) in allen Freiheitsgraden der räumlichen Position und Drehlage des Trägers (1) realisierbar ist, wobei

• mindestens eine Geschwindigkeitsmesseinheit (4) zur Erfassung der Bewegungsgeschwindigkeit v des Trägers (1) relativ zum Rahmen in allen Freiheitsgraden der räumlichen Position und Drehlage des Trägers (1) vorgesehen ist,

**dadurch gekennzeichnet, dass** weiterhin

• mindestens eine Reaktionsmesseinheit (5) zur Erfassung einer mittels der Kraft- und Momentübertragung induzierten Reaktionsgröße als in den Aktorspulen induzierte Spannung $U_{induziert}$ sowie

• eine Auswerte- und Regeleinheit (6) zur Auswertung der mit den Reaktions- und Geschwindigkeitsmesseinheiten erfassten Reaktionsgrößen $U_{induziert}$ und Bewegungsgeschwindigkeiten v des Trägers (1) und gleichzeitigen Einstellung der Bewegungsgeschwindigkeit v des Trägers (1) relativ zum Rahmen und Berechnung von Aktorkennlinien als Beziehung zwischen der Stellgröße $I_{Spule}$ und der wirkenden Kompensationskraft sowie deren Orts- und Winkelabhängigkeit vorgesehen sind.

2. Vorrichtung nach Anspruch 1, wobei die Regel- und Auswerteeinheit (6) eine Einheit (6a) zur Signalumschaltung zwischen einem ersten Modus zur Erfassung der Reaktionsgröße $U_{induziert}$ und einem zweiten Modus zur Vorgabe der Betätigungsgrößen der elektrischen Aktoren (3) umfasst.

3. Vorrichtung nach Anspruch 1 oder 2, wobei der Träger (1) als Raumkreuz ausgebildet ist und an jedem Raumkreuzarm jeweils zwei erste elektrische Aktoren (3), zwei Positionsmesssysteme (2) und zwei zweite elektrische Aktoren (3a) angeordnet sind und die zweiten elektrischen Aktoren (3a) jeweils den ersten elektrischen Aktoren (3) direkt gegenüberliegend und mit gleicher Wirkrichtung zu den ersten elektrischen Aktoren (3) positioniert sind.

4. Vorrichtung nach Anspruch 3, wobei die elektrischen Aktoren (3, 3a) mindestens jeweils eine Spule und einen Permanentmagneten umfassen.

5. Vorrichtung nach Anspruch 4, wobei die Betätigungsgröße der elektrischen Aktoren ein Betätigungsstrom $I_{spule}$ ist und die Reaktionsgröße die durch die Relativbewegung des Trägers (1) zum Rahmen in den Aktorspulen induzierte Spannung $U_{induziert}$ ist.

6. Vorrichtung nach einem der vorangehenden Ansprüche, wobei die Geschwindigkeitsmesseinheiten (4) Laserinterferometer sind.

7. Verfahren zur Kalibrierung von Kraft- und Drehmomentmesseinrichtungen mit einer Vorrichtung nach einem der Ansprüche 1 bis 6, wobei

• mit Hilfe der Auswerte- und Regeleinheit (6) die Betätigungsgrößen der elektrischen Aktoren (3) derart eingestellt werden, dass die durch die Relativbewegung des Trägers (1) zum Rahmen induzierten Reaktionsgrößen als in den Aktorspulen induzierte Spannungen $U_{induziert}$ messbar sind

• die Bewegungsgeschwindigkeit v des Trägers (1) relativ zum Rahmen und die Reaktionsgröße $U_{induziert}$ erfasst werden und

• aus der erfassten Bewegungsgeschwindigkeit v und der Reaktionsgröße $U_{induziert}$ die Aktorkennlinien zur Kalibrierung der Kraft- und Drehmomentmesseinrichtungen in mehreren Freiheitsgraden errechnet werden.

8. Verfahren nach Anspruch 7, wobei durch Bestromung der Spulen der zweiten elektrischen Aktoren (3a) eine Relativbewegung des Trägers (1) zum Rahmen generiert wird und die in den Spulen der ersten elektrischen Aktoren (3) induzierten Spannungen $U_{induziert}$ erfasst werden und die Aktorkennlinien der ersten elektrischen Aktoren (3) errechnet werden.

9. Verfahren nach Anspruch 7, wobei durch Bestromung der Spulen der ersten elektrischen Aktoren (3) eine Relativbewegung des Trägers (1) zum Rahmen generiert wird und die in den Spulen der zweiten elektrischen Aktoren (3) induzierten Spannungen $U_{induziert}$ erfasst werden und die Aktorkennlinien der zweiten elektrischen Aktoren (3) errechnet werden.

10. Verfahren nach einem der Ansprüche 7 bis 9, wobei zur Steigerung der Messgenauigkeit die Spulen der ersten und zweiten elektrischen Aktoren (3, 3a) über die Einheit zur Signalumschaltung (6a) gleichzeitig bestromt werden und die Betätigungsströme der Spulen der ersten und zweiten elektrischen Aktoren erfasst und miteinander rechnerisch verknüpft werden.

11. Verfahren nach Anspruch 10, wobei die Einheit zur Signalumschaltung (6a) die Spulen entgegengesetzt in Reihen schaltet.

12. Verfahren nach einem der Ansprüche 7 bis 11, wobei die Bewegungsgeschwindigkeiten des Trägers (1) relativ zum Rahmen für jede Koordinatenrichtung separat eingestellt und ausgewertet werden.

13. Verfahren nach einem der Ansprüche 7 bis 12, wobei die Relativbewegung des Trägers (1) zum Rahmen mit einem zeitlich periodisch verlaufenden Betätigungsstrom $I_{spule}$ generiert wird und die Aktorkennlinien aus gemittelten Messwerten einer Signalperiode errechnet werden.

14. Verfahren nach einem der Ansprüche 7 bis 13, wobei der erste Modus zur Erfassung der Reaktionsgrößen und der zweite Modus zur Vorgabe der Betätigungsgrößen abwechselnd oder gleichzeitig ablaufen.

**Claims**

1. Device for calibrating force and torque measuring apparatuses, comprising:

   • a stationary frame
   • a mechanically rigid carrier (1) which is movable with respect to the stationary frame and on which forces and torques act
   • position measuring systems (2) for measuring all degrees of freedom of the spatial position and rotational position of the carrier (1) with respect to the frame, and
   • electrical actuators (3) which are designed and arranged such that a transmission of force and torque to the carrier (1) can be achieved in all degrees of freedom of the spatial position and rotational position of the carrier (1),
   • wherein at least one speed measuring unit (4) is provided for detecting the movement speed v of the carrier (1) relative to the frame in all degrees of freedom of the spatial position and rotational position of the carrier (1),
   **characterised in that** further
   • at least one reaction measuring unit (5) is provided for detecting a reaction variable, induced by means of the force and torque transmission, as voltage $U_{induced}$ induced in the actuator coils,
   and
   • an evaluation and control unit (6) is provided for evaluating the reaction variables $U_{induced}$ and the movement speeds v of the carrier (1) that are detected by the reaction and speed measuring units, for simultaneously setting the movement speed v of the carrier (1) relative to the frame and calculating actuator characteristic curves as a relationship between the manipulated variable $I_{coil}$ and the acting compensation force, and for calculating the location dependence and angle dependence of said curves.

2. Device according to claim 1, wherein the control and evaluation unit (6) comprises a unit (6a) for switching signals between a first mode for detecting the reaction variable $U_{induced}$ and a second mode for specifying the actuation variables of the electrical actuators (3).

3. Device according to either claim 1 or claim 2, wherein the carrier (1) is designed as a three-dimensional cross and two first electrical actuators (3), two position measuring systems (2) and two second electrical actuators (3a) are arranged on each three-dimensional cross arm, and the second electrical actuators (3a) are each positioned directly opposite the first electrical actuators (3) and so as to have the same direction of action as the first electrical actuators (3).

4. Device according to claim 3, wherein the electrical actuators (3, 3a) each comprise at least one coil and one permanent magnet.

5. Device according to claim 4, wherein the actuation variable of the electrical actuators is an actuation current $I_{coil}$, and the reaction variable is the voltage $U_{induced}$ induced in the actuator coils by the relative movement of the carrier (1) with respect to the frame.

6. Device according to any of the preceding claims, wherein the speed measuring units (4) are laser interferometers.

7. Method for calibrating force and torque measuring devices using a device according to any of claims 1 to 6, wherein,

   • by means of the evaluation and control unit (6), the actuation variables of the electrical actuators (3) are set such that the reaction variables induced by the relative movement of the carrier (1) with respect to the frame can be measured as voltages $U_{induced}$ induced in the actuator coils
   • the movement speed v of the carrier (1) relative to the frame and the reaction variable $U_{induced}$ are detected, and
   • the actuator characteristic curves are calculated from the detected movement speed v and the reaction variable $U_{induced}$ in a plurality of degrees of freedom in order to calibrate the force and torque measuring devices.

8. Method according to claim 7, wherein, by energising the coils of the second electrical actuators (3a), a relative movement of the carrier (1) with respect to the frame is generated, the voltages $U_{induced}$ induced in the coils of the first electrical actuators (3) are detected and the actuator characteristic curves of the first electrical actuators (3) are calculated.

9. Method according to claim 7, wherein, by energising the coils of the first electrical actuators (3), a relative movement of the carrier (1) with respect to the frame is generated, the voltages $U_{induced}$ induced in the coils of the second electrical actuators (3) are detected and the actuator characteristic curves of the second electrical actuators (3) are calculated.

10. Method according to any of claims 7 to 9, wherein, in order to increase the measurement accuracy, the coils of the first and second electrical actuators (3, 3a) are simultaneously energised via the unit for signal switching (6a), and the actuation currents of the coils of the first and second electrical actuators are detected and computationally linked to one another.

11. Method according to claim 10, wherein the unit for signal switching (6a) connects the coils so as to be series-opposed.

12. Method according to any of claims 7 to 11, wherein the movement speeds of the carrier (1) relative to the frame are set and evaluated separately for each coordinate direction.

13. Method according to any of claims 7 to 12, wherein the relative movement of the carrier (1) with respect to the frame is generated by means of a periodically flowing actuation current $I_{coil}$, and the actuator characteristic curves are calculated from averaged measured values for a signal period.

14. Method according to any of claims 7 to 13, wherein the first mode for detecting the reaction variables and the second mode for specifying the actuation variables run alternately or simultaneously.

**Revendications**

1. Dispositif d'étalonnage de dispositifs de mesure de force et de couple comprenant :

   • un cadre fixe
   • un support (1) mécaniquement rigide qui est mobile par rapport au cadre fixe et sur lequel des forces et des couples sont appliqués
   • des systèmes de mesure de position (2) pour la mesure de tous les degrés de liberté de la position spatiale et de la position de rotation du support (1) par rapport au cadre et
   • des actionneurs électriques (3) conçus et agencés de telle manière qu'une transmission de force et de couple au support (1) dans tous les degrés de liberté de la position spatiale et de la position de rotation du support (1) puisse être réalisée, dans lequel
   • au moins une unité de mesure de vitesse (4) pour la détection de la vitesse de déplacement v du support (1) par rapport au cadre est prévue dans tous les degrés de liberté de la position spatiale et de la position de rotation du support (1), **caractérisé en ce que** en outre
   • au moins une unité de mesure de réaction (5) pour la détection d'une grandeur de réaction induite par la transmission de la force et du couple sous la forme d'une tension $U_{induite}$ induite dans les bobines de l'actionneur, et

• **en ce qu'**une unité d'évaluation et de régulation (6) est prévue pour l'évaluation des grandeurs de réaction $U_{induite}$ et des vitesses de déplacement v du support (1) détectées par les unités de mesure de réaction et de vitesse et pour le réglage simultané de la vitesse de déplacement v du support (1) par rapport au cadre et pour le calcul des caractéristiques de l'actionneur sous la forme d'une relation entre la grandeur de réglage $I_{bobine}$ et la force de compensation active ainsi que leur dépendance de la position et de l'angle.

2. Dispositif selon la revendication 1, dans lequel l'unité de régulation et d'évaluation (6) comprend une unité (6a) pour la commutation de signaux entre un premier mode de détection de la grandeur de réaction $U_{induite}$ et un second mode de spécification des grandeurs d'actionnement des actionneurs électriques (3).

3. Dispositif selon la revendication 1 ou 2, dans lequel le support (1) est réalisé sous la forme d'une croix spatiale et deux premiers actionneurs électriques (3), deux systèmes de mesure de position (2) et deux seconds actionneurs électriques (3a) sont respectivement disposés sur chaque bras de croix spatiale et les seconds actionneurs électriques (3a) sont respectivement positionnés directement en face des premiers actionneurs électriques (3) et avec le même sens d'action par rapport aux premiers actionneurs électriques (3).

4. Dispositif selon la revendication 3, dans lequel les actionneurs électriques (3, 3a) comprennent chacun au moins une bobine et un aimant permanent.

5. Dispositif selon la revendication 4, dans lequel la grandeur d'actionnement des actionneurs électriques est un courant d'actionnement $I_{bobine}$ et la grandeur de réaction est la tension $U_{induite}$ induite dans les bobines d'actionnement par le mouvement relatif du support (1) par rapport au cadre.

6. Dispositif selon l'une des revendications précédentes, dans lequel les unités de mesure de vitesse (4) sont des interféromètres laser.

7. Procédé d'étalonnage de dispositifs de mesure de force et de couple à l'aide d'un dispositif selon l'une des revendications 1 à 6, dans lequel,

   • au moyen de l'unité d'évaluation et de régulation (6), les grandeurs d'actionnement des actionneurs électriques (3) peuvent être réglées de telle manière que les grandeurs de réaction induites par le mouvement relatif du support (1) par rapport au cadre puissent être mesurées comme tensions $U_{induite}$ induites dans les bobines d'actionnement
   • la vitesse de déplacement v du porteur (1) par rapport au cadre et la grandeur de réaction $U_{induite}$ sont détectées, et
   • les caractéristiques des actionneurs pour l'étalonnage des dispositifs de mesure de force et de couple en plusieurs degrés de liberté sont calculées à partir de la vitesse de déplacement v détectée et de la grandeur de réaction $U_{induite}$.

8. Procédé selon la revendication 7, dans lequel, par l'alimentation des bobines des seconds actionneurs électriques (3a), un mouvement relatif du support (1) par rapport au cadre est généré et les tensions $U_{induite}$ induites dans les bobines des premiers actionneurs électriques (3) sont détectées et les caractéristiques des premiers actionneurs électriques (3) sont calculées.

9. Procédé selon la revendication 7, dans lequel, par l'alimentation des bobines des premiers actionneurs électriques (3), un mouvement relatif du support (1) par rapport au cadre est généré et les tensions $U_{induite}$ induites dans les bobines des seconds actionneurs électriques (3) sont détectées et les caractéristiques des seconds actionneurs électriques (3) sont calculées.

10. Procédé selon l'une des revendications 7 à 9, dans lequel, pour augmenter la précision de mesure, les bobines des premiers et seconds actionneurs électriques (3, 3a) sont alimentées simultanément par l'intermédiaire de l'unité de commutation de signaux (6a) et les courants de régulation des bobines des premiers et seconds actionneurs électriques sont détectés et reliés entre eux par calcul.

11. Procédé selon la revendication 10, dans lequel l'unité de commutation de signaux (6a) connecte les bobines en série dans des directions opposées.

12. Procédé selon l'une des revendications 7 à 11, dans lequel les vitesses de déplacement du porteur (1) par rapport au cadre sont réglées et évaluées séparément pour chaque direction de coordonnées.

13. Procédé selon l'une des revendications 7 à 12, dans lequel le mouvement relatif du support (1) par rapport au cadre est généré à l'aide d'un courant d'actionnement $I_{bobine}$ périodiquement dans le temps, et les caractéristiques des actionneurs sont calculées à partir de valeurs de mesure moyennes d'une période de signal.

14. Procédé selon l'une des revendications 7 à 13, dans lequel le premier mode de détection des grandeurs de réaction et le second mode de spécification des grandeurs d'actionnement fonctionnent alternativement ou simultanément.

**Figur 1**

EP 3 504 529 B1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120266648 A
- DE 102011106894
- DE 102015104696 B3
- DE 102011106894 A1

**In der Beschreibung aufgeführte Nicht-Patentliteratur**

- International Organization for Standardization: DIN EN ISO 376:2011-09 Metallische Werkstoffe. *Kalibrierung der Kraftmessgeräte für die Prüfung von Prüfmaschinen mit einachsiger Beanspruchung,* 2011
- *VDI/VDE/DKD: 2638 Kenngrößen für Kraftaufnehmer - Begriffe,* Oktober 2008
- *Deutsche Akkreditierungsstelle GmbH: DAkkS-DKD-R 3-3 Kalibrierung von Kraftmessgeräten, Braunschweig,* 2010
- International organisation of legal metrology: International Recommendation OIML R60. Metrological regulation for load cells. 2000
- International organisation of legal metrology: International Recommendation OIML R76-I. *Non-automatic weighing instruments,* 2006
- Deutsches Institut für Normung: DIN 51309:2005-12. *Werkstoffprüfmaschinen - Kalibrierung von Drehmomentmessgeräten für statische Drehmomente,* Dezember 2005
- *VDI/VDE 2646, Drehmomentmessgeräte Mindestanforderungen an Kalibrierungen,* 2006
- DAkkS-DKD-R 3-5 Kalibrierung von Drehmomentmessgeräten für statische Wechseldrehmomente. *Deutsche Akkreditierungsstelle GmbH,* 2010
- DAkkS-DKD-R 3-8 Statische Kalibrierung von Kalibriereinrichtungen für Drehmomentschraubwerkzeuge. *Deutsche Akkreditierungsstelle GmbH,* 2010
- **D. SCHWIND ; H. RAABE.** A new Calibration Procedure for Multicomponent Transducers, XX IMEKO World Congress. *Metrology for Green Growth,* 09. September 2012
- GTM Testing and Metrology GmbH: Calibration of multicomponent systems of any type, e.g. measuring platforms, with a representation of the uncertainty vector. *GTM-RL-002,* April 2011
- ASTM International: New Test Method for Verification of Multi-Axis Force Measuring Platforms (Draft Under Development). West Conshohocken. ASTM International
- **PETERS, M. et al.** *PTB's new 2 MN Deadweight Force Standard Machine. Proceedings of the 19th IMEKO TC3 Conference,* 2005
- **JAIN, S. K. ; KUMAR, HARISH ; TITUS, S.S.K. ; TEGTMEIER, FALK ; PRENZLOW, NORBERT ; SCHWIND, DANIEL.** *Metrological characterization of the new IMN force standard machine of NPL India, Measurement,* 2012, vol. 3 (45), 590-596
- **TEGTMEIER ; FALK ; KUMME ; ROLF ; SEIDEL ; MARK.** Improvement of the realization of forces between 2 MN and 5 MN at PTB - the new 5 MN force standard machine. *Proceedings of the XIX IMEKO World Congress,* 2009, 186-191
- **BUCHNER ; CHRISTIAN.** Determination of micro-forces from 1 µN up to 10 N realized with a full automatically dead load machine developed. *BEV,* 2009
- *Sartorius Weighing Technology GmbH: Sartorius CCE Series: Electronic Mass Comparators,* 2013, https://www.sartorius.com/fileadmin/fm-dam/DDM/Lab-Products-and-Services/Lab-Weighing/Mass-Comparators/Manuals/MAN-CCE-e.pdf
- **ILLEMANN, JENS ; KUMME, R.** The achievable uncertainty for balance-based force standard machines in the range from micronewton to newton. *IMEKO 20th TC3, 3rd TC16 and Ist TC22 Merida,* 2007
- Construction of a standard force machine for the range of 100\muN-200mN. **SCHLEGEL, CHRISTIAN ; SLANINA, OLIVER ; HAUCKE, GÜNTHER ; KUMME, ROLF.** Measurement. Elsevier, 2012, vol. 10, 2388-2392
- **NESTEROV ; VLADIMIR.** A nanonewton force facility and a novel method for measurements of the air and vacuum permittivity at zero frequencies. *Measurement Science and Technology,* 2009, vol. 084012 (8), 20
- **STOCK, MICHAEL.** *Watt balance experiments for the determination of the Planck constant and the redefinition of the kilogram Metrologia,* 2013, vol. 50, R1-R16

- **STEINER, RICHARD ; NEWELL, DAVID ; WILLIAMS, EDWIN.** Details of the 1998 Watt Balance Experiment Determining the Planck Constant. *Volume J. Res. Natl. Inst. Stand. Technol.,* 2005, vol. 110, 1-26
- **ROBINSON, LA.** A simultaneaus moving and weighing technique for a watt balance at room temperature. *Metrologia,* 2012, vol. 49, 108-112
- **SUTTON, C.M.** An oscillatory dynamic mode for a watt balance. *Metrologia,* 2009, vol. 46, 467-472
- **FANG, H. ; KISS, A. ; DE MIRANDES, E. ; LAN, J. ; ROBERTSSON, L. ; SOLVE, S. ; PICARD, A. ; STOCK, M.** Status of the BIPM Watt Balance. *IEEE Transactions on Instrumentation ans Measurement,* 2013, vol. 62 (6
- **DAVIDSON, S. ; PERKIN, M. ; BUCKLEY, M.** Measurement Good Practice Guide No. 71: The measurement of Mass and Weight. National Physical Laboratory, 2004